# EUROPEAN PATENT SPECIFICATION

(11) **EP 2 837 102 B1**
(45) Date of publication and mention of the grant of the patent: **16.11.2016**
(21) Application number: 12715365.8
(22) Date of filing: 12.04.2012
(51) Int. Cl.: H04B 7/06

(54) **METHOD OF REPORTING CHANNEL STATE INFORMATION**
VERFAHREN ZUM RAPPORTIEREN VON KANALZUSTANDSINFORMATION
MÉTHODE DE RAPPORTAGE DES INFORMATIONS D'ÉTAT DE CANAL

(43) Date of publication of application: 18.02.2015
(73) Proprietor: Nokia Solutions and Networks Oy, 02610 Espoo (FI)
(72) Inventor: ZIRWAS, Wolfgang, 81249 München (DE); FAERBER, Michael, 82515 Wolfratshausen (DE); REDANA, Simone, 81541 Munich (DE); RAAF, Bernhard, 82061 Neuried (DE)
(74) Representative: Borgström, Markus
(86) International application number: PCT/EP2012/056689
(87) International publication number: WO 2013/152794

(56) References cited:
- WO-A1-2011/041759
- US-A1- 2011 159 907
- US-A1- 2011 199 946

## Description

### Field of invention

The present invention relates to a method of reporting channel state information from a network element of a communication network. In particular the communication network may be a mobile communication network. Furthermore, the invention relates to a network element, a method of obtaining channel state information, and a communication network. Additionally, it relates to a program element and a computer readable medium.

### Art Background

The field of invention is mobile radio system concepts or communication network system concepts like 3GPP LTE, LTE-A and its evolution as e.g. disclosed in US2011/0159907 and especially future optimizations for relaying, i.e. the use of relay nodes (RN) additionally to base stations in order to improve the performance of communication network. Relaying as such has been standardized already for LTE Release 10. In the EU funded project ARTIST4G advanced relaying is investigated and specifically cooperative backhauling for the Donor enhanced nodeB (DeNB) to RN links. The motivation is that these backhaul links define predominantly the RN performance, especially with respect to the achievable capacity gains, which are expected to be significant in combination with cooperative relaying.

Cooperative multipoint transmission (CoMP) in combination with relaying has the advantage that RNs are fixed network elements or radio stations and therefore one can expect only minor channel variations. Current reference signal design e.g. for common reference signal (CRS), and channel state information reference signals (CSI RS) are designed to support moderate up to high velocity of movement of a network element, e.g. a user equipment, or high fluctuation of the channel performance.

For advanced cooperative relaying on the feeder links as being investigated in ARTIST4G one can expect from e.g. 3 up to 10 (or even more) relevant channel components (CC), which have to be estimated as well as reported with high accuracy from the RNs to the DeNB. This would allow for very high performance, i.e. for e.g. 4 - 8 data streams per RN with a modulation and coding scheme (MCS) of 64QAM5/6 corresponding to ideally 10 to 20bit/s/Hz on the backhaul link. Latest simulation results achieved a mean spectral efficiency of about 14 bit/s/Hz/cell for all RNs of a cooperation area assuming ideal channel knowledge.

To keep performance losses reasonable low, the CSI accuracy for the channel components should be very high with a normalized mean square error much lower that 0.01 (MSE << 0.01) with respect to the strongest CC. One way to improve CSI estimation accuracy is to provide more orthogonal resources for channel estimation, but this leads to accordingly larger overhead for reference signals, especially for the high number of channel components and under the assumption of high frequency granularity.

3GPP LTE uses the CRS for LTE Release 8 UEs and CSI reference signals as defined in LTE Release 10, where the CSI RSs are sparse in time and frequency. Muting allows to avoid some inter cell interference at the expense of higher overhead. In frequency direction only one RS per PRB is provided, which might be too few in case of advance cooperative backhauling.

One could imagine making use of the relative stable channel conditions by applying some form of CSI delta reporting or according channel tracking solutions, but unfortunately this means already quite some overhead. In case of reporting of a single delta value per physical resource block (PRB) with at least 2 bit per PRB than each report might add up already to 100 (for 50 PRB) * 16 (channel components) = 1600 bit per report. At the same time there might be fast moving objects like a passing car, which then requires dense reporting in time, e.g. every 5 to 10 ms or even faster giving an overall physical uplink control channel (PUCCH) rate of 1600 every 5 ms = 320kbit/s per RN.

Another critical condition for delta tracking is an RN placed e.g. on the end of a lamp post. In case of strong wind the RN might easily swing by several cm, which is already in the range of one wavelength for e.g. 2.6 GHz. As well known - depending on the scenario - within one wavelength the channel conditions might change completely bringing simple tracking solutions to its limits. It can be estimated that for mechanical swing frequencies of 10 Hz a reporting every 2 ms to 5 ms will be needed.

### Summary of the Invention

There may be a need to achieve simultaneously highest channel state information accuracy for a large number of channel components and simultaneously low reporting overhead.

This need may be met by a method of reporting channel state information in a communication network, a network element, a method of obtaining channel state information, a communication network, a program element and a computer readable medium according to the independent claims. Further embodiments are described in the dependent claims.

According to an exemplary aspect there is provided a method of reporting channel state information from a network element to a further network element of a communication network, wherein the method comprises decomposing the channel state information into different portions wherein the different portions correspond to channel state information varying on different time scales, and reporting at least one portion of the decomposed channel state information to a further network element.

In particular, the communication network may be a mobile telecommunication network, e.g. a 3GPP LTE or LTE-A network or a respective evolution or enhanced predecessor of such communication networks. For instance, it may be a mobile communication network adapted to perform cooperative multipoint transmission which may be based on joined precoding. For example, the different portions of the decomposed state information may be reported based on different repetition rates. The term "repetition rate" may particularly denote a parameter which describes the repetitions performed during a given predetermined time period.

According to an exemplary aspect there is provided a network element for performing channel state information reporting in a communication network, the network element comprising a processing unit and a transmitting unit, wherein the processing unit is adapted to decompose channel state information into different portions wherein the different portions correspond to channel state information varying on different time scales, and wherein the transmitting unit is adapted to report the decomposed channel state information to a further network element.

However, the network element may be a base station or nodeB (NB), or an enhanced nodeB (eNB) or even a user equipment, e.g. a mobile phone, laptop, PDA or the like.

According to an exemplary aspect there is provided a communication network, wherein the communication network comprises a network element according to an exemplary aspect, and a user equipment.

In particular, the communication network may be a mobile communication network, e.g. an LTE network or an LTE-A network. The network element may be a stationary network element, e.g. a relay node, base station or eNB of the communication network.

According to an exemplary aspect there is provided a method for obtaining channel state information from a network element of a communication network, wherein the method comprises receiving decomposed channel state information, and obtaining channel state information by back composing the received decomposed channel state information.

In particular, by the back composing a single channel impulse response (CIR) or a single channel transfer function may be obtained.

According to an exemplary aspect there is provided a communication protocol which is adapted to support a message format including decomposed channel state information reports.

That is, the communication protocol may correspond or support corresponding message formats which are adapted to include decomposed channel state information reports. The new message formats may allow for flexible setup of reporting modes from UEs or relay nodes to eNBs.

According to an exemplary aspect of the invention a program element is provided, which, when being executed by a processor, is adapted to control or carry out a method according to an exemplary aspect of the invention.

According to an exemplary aspect of the invention a computer-readable medium, in which a computer program is stored which, when being executed by a processor, is adapted to control or carry out a method according to an exemplary aspect of the invention.

By performing the method according to an exemplary aspect it may be possible to exploit stable channel conditions of a stationary network element for reduced overhead with respect to reference signals as well as regarding the CSI reporting overhead. However, even for a mobile network element, e.g. a mobile phone, laptop or PDA, the method according to an exemplary aspect may be suitable in order to reduce data or signal overhead. Furthermore, improved accuracy for estimated channel components might be achieved as it affects joint precoding cooperative multipoint transmission (JP CoMP) performance gains significantly. Accuracy includes mean square error (MSE) of estimated channels as well as channel prediction quality as well as reporting of channel state information (CSI). In particular, it may be possible to reduce the feedback overhead associated with a reporting of channel state information, since not every portion or part of the channel state information has to be reported with each reporting message. In case of stationary network elements, e.g. relay nodes, a better power supply and higher processing capabilities may be expected. For that reason more advanced feedback schemes going beyond simple codebook based solutions may be possible. Summarizing a gist of an exemplary embodiment may be seen in the fact that for the channel state information reporting the channel state information is decomposed into different portions, which correspond to variations in different time scales. For example, some variations of the respective communication channel and as such a variation of the channel state information may correspond to a very short time scale, e.g. fluctuations of the channel on a 1 to 20 ms time scale, while other variations may correspond or may occur on a much larger time scale, e.g. seconds, minutes, hours, days or even longer. Thus, the channel state information reporting may be decomposed into different portions or parts wherein each portion corresponds to a different variation time scale.

Due to such a decomposition into different portions or parts it may be possible to only report or transmit the channel state information which are necessary, e.g. to omit the reporting of a long time scale variations or at least reduce the reporting rate of the portions corresponding to these long term variations. For example, a difference in the channel state resulting of a night/day difference may only have to be reported fewer times than a short term fluctuation, e.g. only a couple of times per day. By adjusting the reporting or transmitting frequency or occurrence of the different portions or parts to the variation time scale it may be possible to reduce the overhead associated with the reporting or feedbacking of the channel state information.

Next further exemplary embodiments of the method of reporting channel state information are described. However, the embodiments also apply to the network element, the method of obtaining channel state information, the communication network, the program element, and the computer readable medium.

According to an exemplary embodiment the method further comprises coding the decomposed channel state information into a channel state information reporting message before transferring the decomposed channel state information to the further network element.

In particular, the channels state information reporting message may be part of a specific message and/or may be part of a common channel state information report. For example, the channel state information reporting message may be scheduled as a part of a scheduling of resources, e.g. resources may be predetermined or predefined in which the decomposed channel state information is transferred. The scheduling may be based on a fixed rate, wherein the rates may be different for the different portions.

According to an exemplary embodiment the method further comprises determining information indicative of a channel state.

In case the channel state information relates to stationary network elements the determination may be based or may include pre-knowledge of channel variations. For example, pre-knowledge may include mechanical movement, e.g. swings, during strong wind, variation of specific multi-path channels (MPCs) due to moving objects, or noise like fluctuations of leaves. Alternatively or additionally, the determining may be based on measuring and/or evaluating reference signals or pilot signals included in subframes of a communication between network elements in the communication network.

According to an exemplary embodiment the method further comprises processing the information indicative of channels state information to determine the channel status information.

According to an exemplary embodiment of the method the determining of the information indicative of a channel state is performed at intervals having lengths which are different for the different portions.

In particular, the lengths of the intervals may correspond to the varying time scale of the channel state information of the respective portion. For example, the determination frequency or occurrence for the different channel state information portions or parts may be adapted to the time scale of variations occurring in the respective portion or part. Furthermore, the accurateness of the determining or measurements of the channel information may be adapted to the reporting frequency of the respective portion or part.

For example, a portion which is seldom reported or transmitted may be measured more accurate than a portion corresponding to a short term fluctuation. However, since the long term channel state information is reported only seldom the feedback overhead induced by this portion or part is still low or at least is of an acceptable level.

According to an exemplary embodiment of the method a number of the different portions is between 2 and 6.

The number of different portions may be determined based on a balancing between the reduction of overhead data transmitted by the reporting or transferring of the decomposed channel state information and the necessary quality of possibility to estimate a respective channel of the communication network. Examples for the number of different portions may be two, three, four, five or six.

In case two different portions are used one portion may relate to a long term channel state information, i.e. relates to a variation time scale of seconds, minutes, hours or even days, and the second portion may relate to short term fluctuations. In case the one different portion relates to a long term channel state information the respective long term channel state information may be reported less frequent than the one of the second different portion relating to the short term fluctuations.

According to an exemplary embodiment of the method a number of the different portions is four, wherein a first portion relates to long term channel state information, a second portion relates to short term channel movements, a third portion relates to moving objects and a fourth portion relates to short term fluctuations of the channel state.

In particular, the first portion or part may correspond to the long term channel state information reflecting basic channel properties of a communication link, e.g. between a relay node and a donor eNodeB (DeNB), at the specific position of the network element, e.g. the specific RN position. Since this first portion corresponds to basic channel properties, which change only on a large time scale, it may be reported only with a low repetition rate, e.g. seconds, minutes, hours, or even days.

The second portion may correspond to a short term channel movements. For example, the short term channel movements may be caused by movements of a respective relay node which may be attached to a lamp post or the like. The reporting of the second portion may be even more simplified in case it relates to a movement of the relay node, since in such a case only a quantity of different positions and thus channel condition may occur. Therefore, it may be possible only to report an index value corresponding to the actual position.

The third portion may correspond to the case that a moving object passes the respective network element, e.g. a relay node. Especially, in case of a moving object the reporting of the respective portion could be switched off or suppressed in case no moving object is present close to the network element. However, in case such a moving object is present the reporting should be performed on a relative high repetition rate, e.g. each 1 to 20 ms or the like.

The fourth portion may correspond to short term fluctuations of the channel state, i.e. fluctuations occurring on a very short time scale. These fast fluctuations could be reported on a high repetition rate, e.g. every 10 ms or even at 5 ms or 2 ms. Especially these short term fluctuations may be tracked based on demodulation reference signals (DMRSs) to avoid at least some extra data or signal overhead.

According to an exemplary embodiment the method further comprises suppressing the reporting of at least one portion of the decomposed channel state information.

In particular, the suppressing of the reporting may be performed by switching off the reporting of some portions of the decomposed channel state information. For example, the reporting of long term channel state information may be switched off most of the time and may be reported only on a low repetition rate. Furthermore, the reporting of a portion corresponding to a moving object may be switched on only in case an object is moving so close to the network element that it may influence the channel condition.

According to an exemplary embodiment of the method the coded channel state information is an incremental channel state information.

The term "incremental channel state information" may particularly denote that the coded channel state information is indicative of a modification or change of the channel state with respect to an earlier measured, determined and/or reported channel state. For example, the incremental channel state information may only be indicative of the difference or delta of the channel state at a first point in time reported by a first reporting message and a second point in time reported by a second, e.g. the next or the following, reporting message. In particular, the following reporting message may denote the next reporting message into which the same portion of channel state information is coded. In this context it should be noted that in case the different portions of the channel state information corresponding to different time scales may be reported or transferred on a different time scale as well, i.e. short term fluctuations may be reported more frequently than changes which relates to a seasonal change of the channel state, e.g. due to leaves on a tree in summer and trees having no leaves in the winter.

According to an exemplary embodiment the network element further comprises a scheduler, wherein the scheduler is adapted to perform a scheduling, wherein the different portions are scheduled according to different feedback types.

In particular, a feedback type may be defined for example by the reporting rate. Thus, different feedback types may be defined by different rates, i.e. bits per time interval or time scales. For example, one feedback type may correspond to a low rate, e.g. few bits every 1 to 20 ms or even every 5 to 10 ms. The term "rate" which may be measured in bits/s, may have to be distinguished from the term "repetition rate", i.e. how often a new reporting is performed. In particular, it should be noted that even a high repetition rate, e.g. every 5 ms may lead to a low rate, in case only a small number of bits are transmitted during each reporting. Such a low rate may be suitable for channels state information corresponding or indicative of short term fluctuation or moving objects. Another feedback type may correspond to short term channel movements, e.g. regularly or even predictive movements of the network element, e.g. a relay node attached to a lamp post moving or oscillating due to high winds. Such a feedback type may have a time scale of about 50 ms to 200 ms, e.g. about 100 ms.

Summarizing an idea of an exemplary embodiment may be seen in the fact that for reporting channel state information each channel component may be decomposed at the RN into long term, short term, moving objects and short term fluctuations CSI reports. At the receiver all this information may be composed back into a single CIR or channel transfer function.

Especially for RNs the concept may makes use of some pre-knowledge about typical channel variation effects for fixed radio links, like mechanical swings during strong wind, variation of specific MPCs due to moving objects, noise like fluctuations of leaves.

The benefit of the concept may be that it reduces the feedback overhead to the minimal required effort dependent on the current channel conditions with simultaneously more or less constant and high CSI accuracy. For example, in case of low wind the feedback of "short term channel movements" may be switched off. Reporting of moving objects might be switched on and off depending on the current situation, i.e. similar as for cars with start stop automatic in case of stopped traffic due to a red traffic light moving object reports might be interrupted and switched on afterwards.

From a high level the reporting scheme may combine different feedback types.

For optimum accuracy a predefined low rate (few bits every 5 ms to 10 ms) feedback link for the noise like CSI variations may be required. Reporting of moving objects might be possible on relative short notice, i.e. within 10 ms and may be reported afterwards also on predefined resources with relative fast repetition rate. Short term channel movements may be ideally scheduled on predefined resources with fixed rate but quite seldom (e.g. in the range of 100 ms), while long term CSI reporting is very flexible and can be part of normal UL scheduling.

Furthermore, the different portions or parts of the decomposed channel status information reports may be selectively switched on or off to adapt the reporting to the channel condition. Thus, according to this exemplary embodiment an adaptive low rate high accuracy reporting scheme, in particular for fixed network elements or radio station, may be provided.

It has to be pointed out that of course any combination of features relating to different aspects of the herein disclosed subject matter is also possible. In particular, some embodiments have been described with reference to apparatus type claims whereas other embodiments have been described with reference to method type claims. However, a person skilled in the art will gather from the above and the following description that, unless otherwise notified, in addition to any combination of features belonging to one aspect also any combination between features relating to different aspects or embodiments, for example even between features of the apparatus type claims and features of the method type claims is considered to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 schematically shows an adaptive low rate high accuracy reporting scheme for a network element.
Fig. 2 schematically shows strong channel variations due to wind induced relay node movements.
Fig. 3 schematically shows main effects affecting channel impulse response of a fixed network element.

### Detailed Description

The illustration in the drawings is schematic. It is noted that in different figures, similar or identical elements are provided with the same reference signs or with reference signs, which are different from the corresponding reference signs only within the first digit.

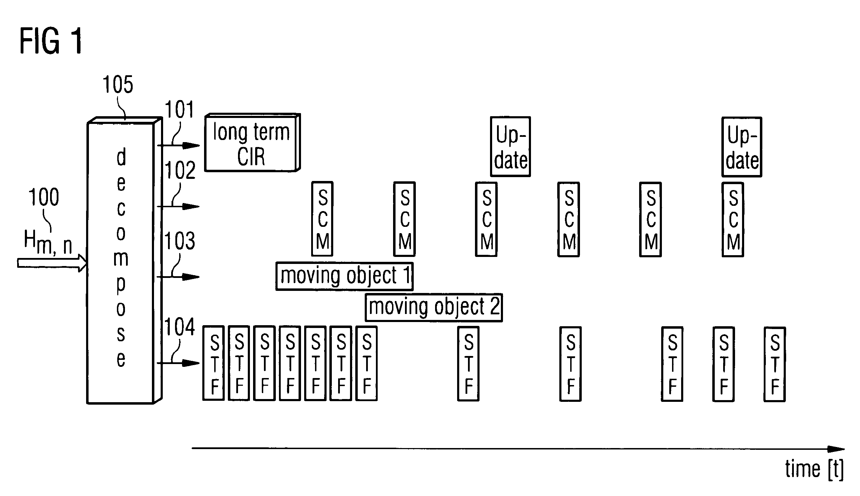

Fig. 1 schematically shows an adaptive low rate high accuracy reporting scheme for a network element which may be performed by a network element, e.g. a relay node, of a communication network. In particular, Fig. 1 schematically illustrates the decomposing of a single channel transfer function or channel matrix H_{m,n} 100 into a plurality of portions or parts 101, 102, 103, 104. The decomposing may be performed by a processing unit. The decomposing is schematically illustrated by the block 105 of Fig. 1. In particular, four portions are illustrated corresponding to variations of the channel conditions in different time scales. However, other numbers of portions than four may also be used.

A first portion 101 reflects the basic channel properties of the RN - DeNB links at the specific RN position. The respective portion may provide an adaptation for varying environment. The first portion may be achieved either by seldom, but extremely accurate measurements based on e.g. one or several subsequent subframes completely filled with RSs. Even in this case the overall overhead may still be very low as these extremely accurate measurements will be done only very seldom, for example in seconds, minutes or even hours and will then be used for updating the basic channel model at the eNB side.

Alternatively or additionally a statistical averaging over longer time periods might be done, suppressing all channel fluctuations, e.g. esteeming from moving objects, persons, leaves and so on.

The long term CSI may be the basis for further reporting used at UE, RN as well as eNB side. Due to the very low update rate this model can be exchanged with high accuracy and additionally in acknowledged mode, possibly ensuring that RN and eNB use exactly the same model.

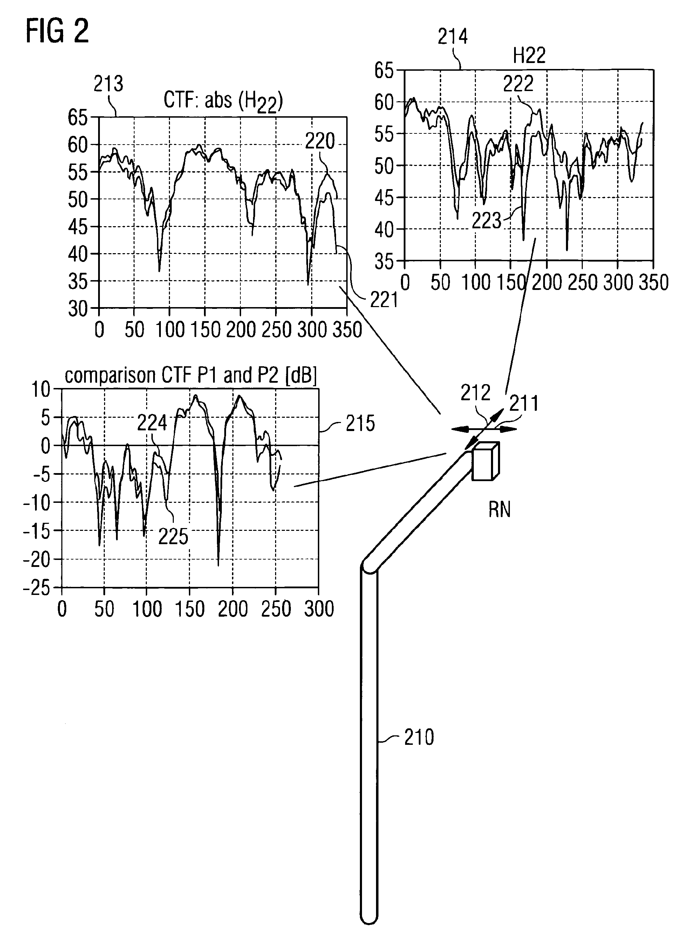

A second portion 102 reflects short term channel movements and it means the reporting of the relative RN with respect to the center position. The respective portion may be provided at an adaptive rate of short term channel movements (SCM). An example for such a short term channel movement may be the movement of an RN fixed at a lamp post which will, especially in case of strong wind, move according to its mechanical Eigenmode back and forth generating movements of few mm to cm and an accordingly strong channel variation as this is already a significant part of the RF carrier frequency wavelength. The resulting channel conditions and the respective variations are schematically depicted in Fig. 2. Another option of reporting can be performed when each potential position of the RN is connected to a full wideband CSI. It may then be sufficient to report only the code index into the according CSI. As the lamp post will follow harmonic swings or oscillations, even a prediction can be included. Instead of reporting the codebook index as such the mechanical swing frequency, the amplitude together with an accurate location update from time to time might reduce the reporting effort even further.

A third portion 103 reflects the influence of moving objects. Due to the RN height the RN - DeNB links are typically less affected by moving objects like cars or persons compared to UEs. But sometimes there might be some relevant MPCs affected by fast moving objects. A reporting in the frequency domain would generate extremely large reporting overhead as the whole wideband channel will be affected. Thus, preferably an extra reporting of the few affected fast varying multi path components of the CIR derived from time domain analysis is performed. This type of reporting is preferably used only in case there is a fast moving object and otherwise it is preferably switched off. That is, this portion may only be reported seldom at occurrence of moving objects.

A fourth portion 104 reflects short term fluctuations. The short term fluctuation portion is the only portion which is preferably reported with a high repetition rate of maybe every 10 ms down to 2 to 5 ms. The respective portion may be provided at an adaptive rate of short term fluctuations (STF) reports. It tracks the fast fluctuations of the channel, e.g. due to moving leaves, and may ensure high accuracy. It might be adapted depending on the fluctuation level in its feedback rate as well as its quantization level. For example, it might be 1 bit reports per e.g. multipath component to minimize the generated overhead. In particular, an adaptive delta modulation (ADM) approach may be used, which adapts automatically the quantization level to the current channel fluctuations. The fourth portion may be used to make a final fine tuning for the already otherwise quite accurately reported CSI values and to minimize the feedback outdating time.

Specifically the short term fluctuations might be tracked based on DMRS to avoid extra reference signal overhead. Note for RNs one may expect quite constant scheduling decisions and lower load variations due to the trunking gain on the DeN-RN links. This possibly makes the DMRS based approach more reasonable as DMRS are only transmitted on scheduled PRBs in combination with user data.

As can be seen in Fig. 1 the reporting of the different portions may be adapted to a time scale characterizing the time scale of variations of the specific component. For example, the portion of the decomposed channel state information relating or reflecting the long term channel state information is reported quite seldom compared to the one reflecting the short term fluctuations. In particular, the third portion 103 is only reported in cases the respective network element, e.g. relay node, is passed by a moving object. At other times the reporting of the respective portion is preferably switched off. Contrary to this the repetition rate of the short term fluctuations is comparatively high, while at the same time the bits per report is maintained as low as possible.

Fig. 2 schematically shows strong channel variations due to wind induced relay node movements. In particular, Fig. 2 shows a schematic lamp post 210 to which a relay node is attached. Due to strong winds the light post may swing or oscillate according to its Eigenmodes wherein the amplitude of the movements may be in the range of mm up to a couple of cm. The oscillation is schematically indicated by the arrows 211 and 212. The diagrams 213, 214 and 215 represent the channel transfer function (CTF), in particular, the absolute value of the CTF coefficient H₂₂, which may be indicative of location dependent channel conditions. In particular, diagram 213 depicts the CTF coefficient for channel for two time intervals of 100 ms each and for a first position of the relay node. The measurements corresponding to the two time intervals are depicted as the two lines 220 and 221 wherein the time difference between the two measurements is about 40 minutes. In the same way diagram 214 depicts two measurements 222 and 223 for a second position of the relay node. Furthermore, diagram 215 depicts two measurements 224 and 225 for a third position of the relay node.

As can be seen the variation or course of the channel condition are similar for each channel when comparing the first measurement with the second measurement, even though the variations during the 100 ms are quite high.

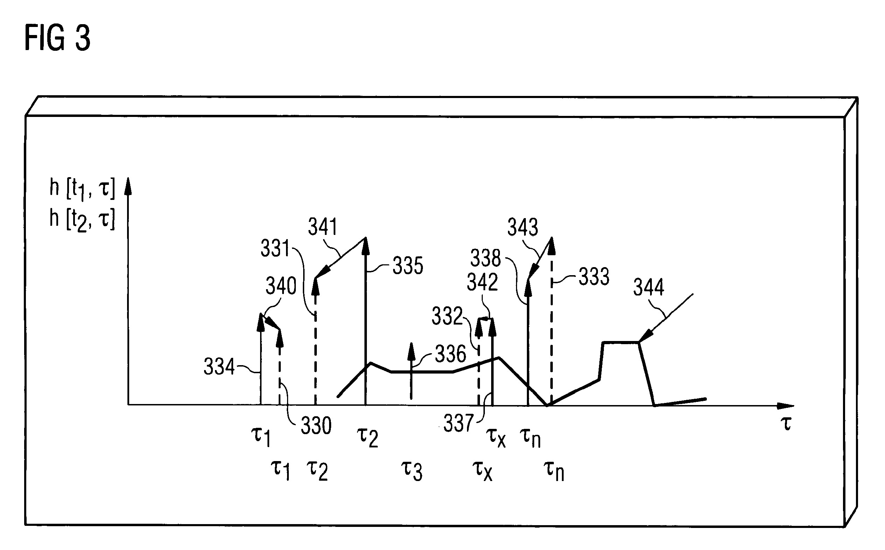

Fig. 3 schematically shows main effects affecting channel impulse response (CIR) of a fixed network element. In particular, Fig. 3 schematically shows for several points in time Tₙ, indicated by the vertical arrows 330 to 338, the deviations of measured and predicted CIR for a single channel. The predicted CIRs are thereby indicated by the arrows 330, 331, 332, and 333, while the measured CIRs are indicated by the arrows 334, 335, 336, 337, and 338. For illustrative purposes the differences between the predictions and the measurements are indicated by the arrows 340, 341, 342, and 343. It should be noted that arrow 336 relates to a newly appearance of a new mobile channel component. Additionally, fluctuation component, i.e. a short term fluctuation component or portion, is indicated by the line 344.

In general the CIR is affected by a) evolution due to changes in environment, b) movements of the relay node or radio station within stationary channel, c) appearances and disappearances of components e.g. due to moving objects within scenario and d) fluctuation floor, e.g. due to moving leaves of a tree.

Summarizing by the methods of reporting and obtaining channel state information according to an exemplary embodiment a decomposing of the channel state information report may enable flexible adaptations to specific types of channel variations. By such a corresponding scheme it may be possible that objects of a cooperative multipoint transmission and a corresponding channel state information estimation may be achievable. Some objects or desired advantages may be:
▪ support up to ∼ 8-16 relevant channel components;
▪ 4-8 streams per RN a 64QAM → 10 ... 20bit/s peak rate;
▪ optimal CSI accuracy: MSE <<= 0.01; and
▪ minimum RS overhead for CSI RS.

Furthermore, for cooperative relaying (CoR) channels, following challenges, which are expected with respect to CSI RSs, may at least partially be addressed by a method according to an exemplary embodiment:
- CSI RS should be dense in frequency domain (e.g. 2 RSs per PRB and AP)
- Time domain issues:
   - exploit large expected coherence time as far as possible
   - special solution for potential seldom fast moving objects like passing cars
   - special solution for CSI variations due to mechanical swings of RN or eNB
   - adaptation to long term variations of the channel conditions, e.g. due to trees with and without leaves (summer/winter)
   - effective reporting of noise like channel fluctuations, e.g. from tree reflections with moving leaves
   - minimizing noise effects.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

Further the examples and embodiments should not be construed as limiting the scope of the claims. Further, many variations are possible without leaving the scope of the appended claims.

### List of reference signs:

- 100: channel transfer matrix
- 101-104: portions of channel state information
- 105: decomposition
- 210: lamp post
- 211: oscillation
- 212: oscillation
- 213-215: diagrams of channel transfer function
- 220-225: timely course of CTF coefficient,
- 330-333: predicted CIRs
- 334-338: measured CIRs
- 340-343: differences predicted-measured CIRs
- 344: short term fluctuations

## Claims

1. Method of reporting channel state information from a network element to a further network element of a communication network, the method comprising:
determining information indicative of a channel state,
decomposing the channel state information into different portions wherein the different portions correspond to channel state information varying on different time scales; and
reporting at least one portion of the decomposed channel state information to a further network element **characterised in that** the step of determining the information indicative of a channel state is performed at intervals having lengths which are different for the different portions, the lengths of the intervals corresponding to the varying time scale of the channel state information of the respective portion.

2. The method according to claim 1, further comprising coding the decomposed channel state information into a channel state information reporting message before transferring the decomposed channel state information to the further network element.

3. The method according to claim 1, further comprising processing the information indicative of channels state information to determine the channel status information.

4. The method according to any one of the claims 1 to 3, wherein a number of the different portions is between 2 and 6.

5. The method according to claim,
wherein a number of the different portions is four,
wherein a first portion relates to long term channel state information, a second portion relates to short term channel movements, a third portion relates to moving objects and a fourth portion relates to short term fluctuations of the channel state.

6. The method according to any one of the claims 1 to 5, further comprising:
suppressing the reporting of at least one portion of the decomposed channel state information.

7. The method according to any one of the claims 1 to 6, wherein the coded channel state information is an incremental channel state information.

8. A network element for performing channel state information reporting in a communication network, the network element comprising:
a processing unit; and
a transmitting unit;
wherein the processing unit is adapted to determine information indicative of a channel state and decompose channel state information into different portions wherein the different portions correspond to channel state information varying on different time scales; and
wherein the transmitting unit is adapted to report the decomposed channel state information to a further network element, **characterised in that** the processing unit is further adapted to determine the information indicative of a channel state at intervals having lengths which are different for the different portions, the lengths of the intervals corresponding to the varying time scale of the channel state information of the respective portion.

9. The network element according to claim 8, further comprising a scheduler,
wherein the scheduler is adapted to perform a scheduling, wherein the different portions are scheduled according to different feedback types.

10. A method for obtaining channel state information, reported according to the method of claim 1, from a network element of a communication network, the method comprising:
receiving decomposed channel state information; and
obtaining channel state information by back composing the received decomposed channel state information.

## Patentansprüche

1. Verfahren zum Berichten von Kanalzustandsinformationen von einem Netzwerkelement an ein weiteres Netzwerkelement eines Kommunikationsnetzwerks, das Verfahren umfassend:
Bestimmen von Informationen, die einen Kanalzustand angeben,
Zerlegen der Kanalzustandsinformationen in verschiedene Abschnitte, wobei die verschiedenen Abschnitte mit Kanalzustandsinformationen korrespondieren, die in verschiedenen Zeitmaßstäben variieren; und
Berichten mindestens eines Abschnitts der zerlegten Kanalzustandsinformationen an ein weiteres Netzwerkelement, **dadurch gekennzeichnet, dass** der Schritt des Bestimmens der Informationen, die einen Kanalzustand angeben, in Intervallen durchgeführt wird, die Längen aufweisen, die für die verschiedenen Abschnitte verschieden sind, wobei die Längen der Intervalle mit den variierenden Zeitmaßstäben der Kanalzustandsinformationen des jeweiligen Abschnitts korrespondieren.

2. Verfahren nach Anspruch 1, ferner umfassend, die zerlegten Kanalzustandsinformationen vor dem Übertragen der zerlegten Kanalzustandsinformationen an das weitere Netzwerkelement in eine Kanalzustandsinformationen-Berichtserstattungsnachricht zu codieren.

3. Verfahren nach Anspruch 1, ferner umfassend, die Informationen, die Kanalzustandsinformationen angeben, zu verarbeiten, um die Kanalzustandsinformationen zu bestimmen.

4. Verfahren nach einem der Ansprüche 1 bis 3, wobei eine Anzahl der verschiedenen Abschnitte zwischen 2 und 6 ist.

5. Verfahren nach Anspruch,
wobei eine Anzahl der verschiedenen Abschnitte vier ist, wobei ein erster Abschnitt zu langfristigen Kanalzustandsinformationen in Beziehung steht, ein zweiter Abschnitt zu kurzfristigen Kanalbewegungen in Beziehung steht, ein dritter Abschnitt zu sich bewegenden Objekten in Beziehung steht und ein vierter Abschnitt zu kurzfristigen Schwankungen des Kanalzustands in Beziehung steht.

6. Verfahren nach einem der Ansprüche 1 bis 5, ferner umfassend:
Unterdrücken des Berichtens mindestens eines Abschnitts der zerlegten Kanalzustandsinformationen.

7. Verfahren nach einem der Ansprüche 1 bis 6, wobei die codierten Kanalzustandsinformationen inkrementelle Kanalzustandsinformationen sind.

8. Netzwerkelement zum Durchführen von Kanalzustandsinformationen-Berichtserstattung in einem Kommunikationsnetzwerk, das Netzwerkelement umfassend:
eine Verarbeitungseinheit; und
eine Übertragungseinheit;
wobei die Verarbeitungseinheit angepasst ist, Informationen zu bestimmen, die einen Kanalzustand angeben, und Kanalzustandsinformationen in verschiedene Abschnitte zu zerlegen, wobei die verschiedenen Abschnitte mit Kanalzustandsinformationen korrespondieren, die in verschiedenen Zeitmaßstäben variieren; und
wobei die Übertragungseinheit angepasst ist, die zerlegten Kanalzustandsinformationen an ein weiteres Netzwerkelement zu berichten, **dadurch gekennzeichnet, dass** die Verarbeitungseinheit ferner angepasst ist, die Informationen, die einen Kanalzustand angeben, in Intervallen zu bestimmen, die Längen aufweisen, die für die verschiedenen Abschnitte verschieden sind, wobei die Längen der Intervalle mit dem variierenden Zeitmaßstab der Kanalzustandsinformationen des jeweiligen Abschnitts korrespondieren.

9. Netzwerkelement nach Anspruch 8, ferner eine Terminierungsvorrichtung umfassend,
wobei die Terminierungsvorrichtung angepasst ist, eine Terminierung durchzuführen, wobei die verschiedenen Abschnitte gemäß verschiedenen Rückmeldungstypen terminiert werden.

10. Verfahren zum Erhalten von Kanalzustandsinformationen, die gemäß dem Verfahren nach Anspruch 1 berichtet werden, von einem Netzwerkelement eines Kommunikationsnetzwerks, das Verfahren umfassend:
Empfangen zerlegter Kanalzustandsinformationen; und
Erhalten von Kanalzustandsinformationen durch Rückzusammensetzung der empfangenen zerlegten Kanalzustandsinformationen.

## Revendications

1. Procédé de communication d'informations d'état de canal d'un élément de réseau à un autre élément de réseau d'un réseau de communication, le procédé comprenant :
la détermination d'informations indicatrices d'un état de canal,
la décomposition des informations d'état de canal en différentes parties, dans lequel les différentes parties correspondent à des informations d'état de canal variant à différentes échelles temporelles ; et
la communication d'au moins une partie des informations d'état de canal décomposées à un autre élément de réseau **caractérisé en ce que** l'étape de détermination des informations indicatrices d'un état de canal est mise en oeuvre à des intervalles ayant des longueurs qui sont différentes pour les différentes parties, les longueurs des intervalles correspondant à l'échelle temporelle variable des informations d'état de canal de la partie respective.

2. Procédé selon la revendication 1 comprenant en outre le codage des informations d'état de canal décomposées dans un message de communication d'informations d'état de canal avant de transférer les informations d'état de canal décomposées à l'autre élément de réseau.

3. Procédé selon la revendication 1 comprenant en outre le traitement des informations indicatrices d'informations d'état de canal pour déterminer les informations de statut de canal.

4. Procédé selon l'une quelconque des revendications 1 à 3, dans lequel un nombre des différentes parties est entre 2 et 6.

5. Procédé selon la revendication,
dans lequel un nombre des différentes parties est quatre,
dans lequel une première partie se rapporte à des informations d'état de canal à long terme, une deuxième partie se rapporte à des mouvements de canal à court terme, une troisième partie se rapporte à des objets mobiles et une quatrième se rapporte à des fluctuations à court terme de l'état de canal.

6. Procédé selon l'une quelconque des revendications 1 à 5, comprenant en outre :
la suppression de la communication d'au moins une partie des informations d'état de canal décomposées.

7. Procédé selon l'une quelconque des revendications 1 à 6, dans lequel les informations d'état de canal codées sont des informations d'état de canal incrémentielles.

8. Élément de réseau pour exécuter une communication d'informations d'état de canal dans un réseau de communication, l'élément de réseau comprenant :
une unité de traitement ; et
une unité de transmission ;
dans lequel l'unité de traitement est adaptée à déterminer des informations indicatrices d'un état de canal et décomposer des informations d'état de canal en différentes parties, dans lequel les différentes parties correspondent à des informations d'état de canal variant à différentes échelles temporelles ; et
dans lequel l'unité de transmission est adaptée à communiquer les informations d'état de canal décomposées à un autre élément de réseau, **caractérisé en ce que** l'unité de traitement est en outre adaptée à déterminer les informations indicatrices d'un état de canal à des intervalles ayant des longueurs qui sont différentes pour les différentes parties, les longueurs des intervalles correspondant à l'échelle temporelle variable des informations d'état de canal de la partie respective.

9. Élément de réseau selon la revendication 8, comprenant en outre un ordonnanceur,
dans lequel l'ordonnanceur est adapté à mettre en oeuvre un ordonnancement, dans lequel les différentes parties sont ordonnancées en fonction de différents types de rétroaction.

10. Procédé pour obtenir des informations d'état de canal, communiquées selon le procédé de la revendication 1, d'un élément de réseau d'un réseau de communication, le procédé comprenant :
la réception d'informations d'état de canal décomposées ; et
l'obtention d'informations d'état de canal par recomposition des informations d'état de canal décomposées reçues.
